# EUROPEAN PATENT SPECIFICATION

(11) **EP 2 376 862 B1**
(45) Date of publication and mention of the grant of the patent: **22.02.2017**
(21) Application number: 09833706.6
(22) Date of filing: 04.12.2009
(51) Int. Cl.: B60R 21/268, B63C 9/19, F42B 3/22, F42B 3/12, F42C 19/12, F42B 33/02

(54) **AN EXPLOSIVE DEVICE AND METHOD FOR MANUFACTURING SUCH A DEVICE**
EXPLOSIONSVORRICHTUNG UND VERFAHREN ZUR HERSTELLUNG SOLCH EINER VORRICHTUNG
DISPOSITIF EXPLOSIF ET PROCÉDÉ DE FABRICATION D'UN TEL DISPOSITIF

(30) Priority: 15.12.2008 SE 0802570
(43) Date of publication of application: 19.10.2011
(73) Proprietor: Ernström Technolgy AB, 404 27 Göteborg (SE)
(72) Inventor: CHRISTIANSSON, Tor, S-333 93 Skeppshult (SE); ISBERG, Erik, S-893 92 Bjälsta (SE)
(74) Representative: Stenborg, Anders Vilhelm
(86) International application number: PCT/SE2009/000507
(87) International publication number: WO 2010/071537

(56) References cited:
- DE-A1- 19 626 809
- DE-U1- 29 606 782
- FR-A1- 2 733 712
- US-A- 5 413 247
- US-A1- 2008 038 970
- US-A1- 2008 041 259
- US-A1- 2008 276 819
- US-A1- 2008 276 819

## Description

### Technical field

The present invention relates to an explosive device, especially suitable to be implemented in a planar design, such as a sheet of material. The invention also relates to a method for manufacturing the explosive device.

### Background

Explosive devices used for penetrating pressurized gas containers, today in combination with inflatable rescue equipment, such as disclosed in the published WO 2008/013489, are rather bulky and have a complex design with many different components.

Other penetrating devices are based on one or more moving components that mechanically penetrate the pressurized gas containers. This requires a complex design in order to ensure proper functionality and as a result of the complex design, the weight is normally rather high.

For instance, US 5,413,247 by Glasa, describes a system wherein a sharp object is mechanically moved using a spring loaded force. Alternatively, the force needed to advance the sharp object could be provided by a pyrotechnical charge. In both cases the dimension of the sharp object will determine the size of the hole.

In addition, a German utility model DE 296 06 782 U1 describes an automatic rescue device for sea and air transport including a water sensor. A puncture device is briefly discussed, which is used to open a pressurized gas cylinder. The puncture device could be implemented as a chemical reaction unit, and more specifically be constructed as a pyrotechnical detonator situated outside a gas management device through which the gas flows when the gas cylinder is opened. A hollow needle could also be used for manually puncturing the closure of the gas cylinder if needed.

The major disadvantage with prior art devices is that they are bulky and have a complex design, with or without moving parts. When implementing an explosive device in a system, e.g. for penetrating a gas cylinder or for igniting a charge in military applications, space is a crucial limitation, and there still exists a need to reduce the size of present explosive devices.

In the published US patent application US 2008/0276819 A1, which forms a starting point for the current invention, multi-layered microcavities and actuators are disclosed. The microcavity structure includes a first substrate, which has a region of interest. A second substrate with a perforation therein is bonded to the first substrate. The perforation coincides with the region of interest. The region of interest includes one or more circuit components, including an actuator, such as a bridgewire, thereon or therein. The perforation accommodates energetic material that is selectively ignited via the actuator.

### Summary of the invention

An object with the present invention is to provide an explosive device which is smaller and easier to manufacture compared to prior art devices.

A solution to the object is achieved by providing a sheet of material with one or more holes having an opening to a first side of the sheet of material. The holes are at least partially filled with an explosive material and one or more igniting stimuli configured to ignite the explosive material when activated are arranged on the first side. The igniting stimuli are connected between conductive surfaces on the sheet of material.

An advantage with the present invention is that a very small and compact explosive device may be manufactured compared to prior art devices.

Another advantage with the present invention is that a simple construction with few non-moving components is achieved compared to prior art devices.

Yet another advantage with the present invention is that it has a low weight and is inexpensive to manufacture.

Still another advantage with the present invention is that the explosive device is very stable compared to prior art devices and may be handled easier.

Further advantages and objects will be apparent to a skilled person from the detailed description below.

### Brief description of the drawings

Fig. 1 shows a perspective view of a first embodiment of an explosive device.
Fig. 2 shows a cross-sectional view of the explosive device in figure 1 along A-A.
Fig. 3 shows a top view of a circuit board provided with electronics coupled to a second embodiment of an explosive device.
Figs. 4a-4d illustrate a method for manufacturing the explosive device in figure 1.
Figs. 5a and 5b illustrate the function of the explosive device in figure 1 when mounted to a pressurized container of air.
Figs. 6a-6d show alternative embodiments of an explosive device according to the invention.
Fig. 7 shows an explosive device in a multilayered structure
Fig. 8 shows an explosive device provided with two independent igniting stimuli.
Figs 9a-9d illustrate a method for manufacturing the explosive device in figure 6a.

It should be noted that the figures in the drawings are not scale, and primarily serves the purpose of enhancing certain details of the invention.

### Detailed description of preferred embodiments

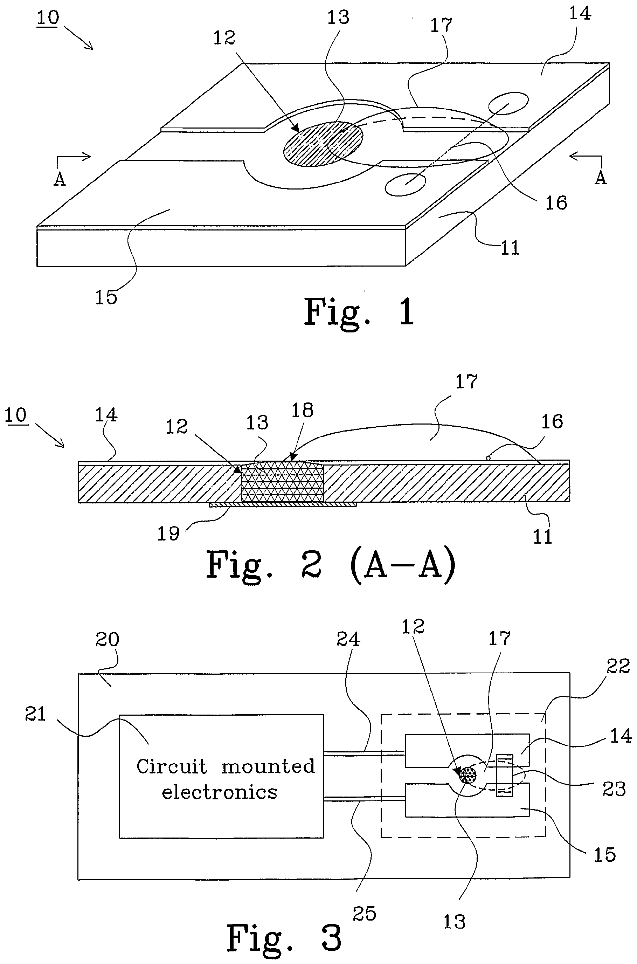

Figure 1 shows a perspective view of a first embodiment of an explosive device 10 comprising a sheet of material 11 having a through hole 12 filled with an explosive material 13, such as AgN₃ or PETN. Two surfaces 14 and 15 made from a conductive material, e.g. copper, are arranged on the sheet of material 11. A conductor 16, such as an exploding bridge wire (EBW) or a resistive thermal igniter, is electrically connected between the two surfaces 14 and 15, e.g. by soldering, clamping or conductive glue. An ignition transfer material 17 is arranged between the conductor 16 and the explosive material 13 in the hole 12.

It should be noted that it is essential that the two conductive surfaces 14 and 15 are insulated from each other, which in this embodiment is achieved by selecting the sheet of material 11 to have insulating properties, such as a printed circuit board. The explosive device 10 is activated by applying suitable pulse of energy between the conductive surfaces 14 and 15 as illustrated in figure 3. The pulse of energy may be an electrical pulse, mechanical pulse or a laser pulse (laser ignition) depending on what type of conductor is used.

Figure 2 shows a cross-sectional view of the explosive 10 device in figure 1 along A-A. The explosive material 13 completely fills the through hole, and there is even some material that extends beyond the through hole as indicated by the bowed shape 18 of the upper part of the explosive material 13. A film 19 is also provided at the lower part of the through hole to provide a seal which prevents the explosive material 13 to migrate from its position within the hole 12.

Figure 3 shows a top view of a circuit board 20 provided with electronics 21 coupled to a second embodiment of an explosive device 22. The only difference between the embodiment described in connection with figures 1 and 2 is that an exploding foil 23 acts as a conductor between the conductive surfaces 14 and 15. The explosive device in figure 3 also comprises a hole 12 completely filled with an explosive material 13, and an ignition transfer material 17 is provided between the conductor and the explosive material 13.

Each conductive surface 14, 15 of the explosive device 22 is connected to the electronics using electrical connection 24 and 25, respectively, which preferably are etched on the circuit board 20. The electronics 21 are preferably surface mounted control electronics that provides suitable energy to activate the explosive device. The electronics may also comprise communication means to receive instructions to activate the explosive device from an external transmitter and/or sensor device.

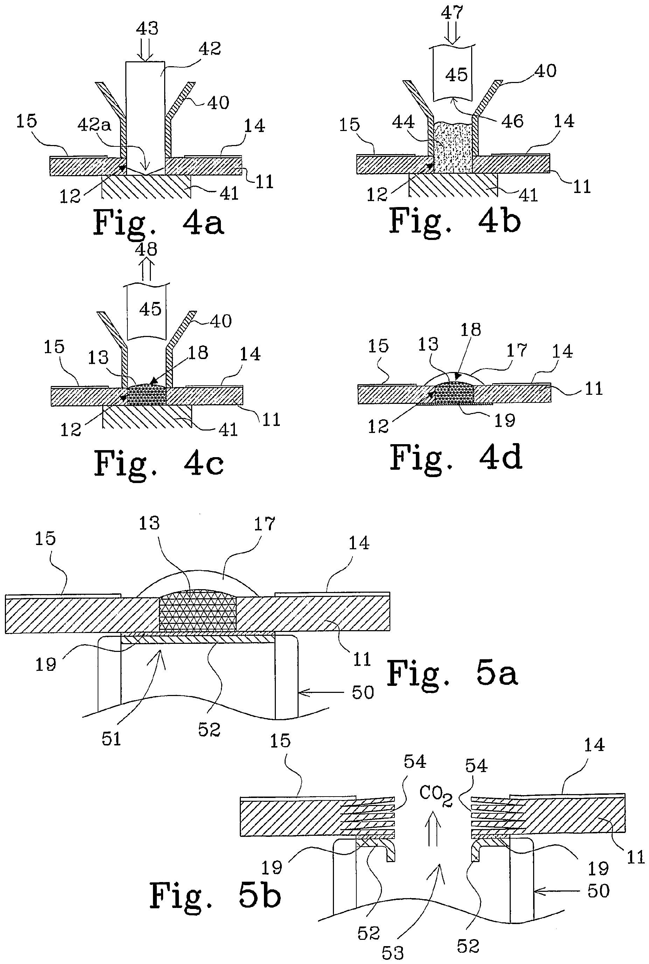

Figures 4a-4d illustrate a method for manufacturing the explosive device in figure 1. In figure 4a, the non-conductive sheet of material 11 with the through hole 12 and conductive surfaces 14 and 15 is placed on a support 41 in such a way that the upper surface of the support 41 covers the complete opening of the through hole 12 on a second side of the sheet of material 11. A funnel 40 is arranged on a first side, opposite to the second side of the sheet of material 11 and a first end 42a of a guiding pin 42 is introduced into the funnel and the through hole, as indicated by arrow 43, to align the small funnel opening with the hole 12.

The guiding pin 42 preferably has a snug fit when introduced into the funnel and have the first end 42a has a tapered shape to automatically align the hole and the funnel to each other. The guiding pin 42 is thereafter retracted, leaving the small funnel opening aligned with the hole 12 on a first side of the sheet of material 11, and the support 41 covering the opening of the hole on the second side of the sheet of material 11.

Figure 4b shows the compressing stage of the manufacturing procedure, in which explosive material 44 is provided into the funnel in a loose powdered form. The amount of powder is predetermined and is positioned in the narrow part of the funnel 40. A tool 45 preferably having a concave tip 46 is introduced into the funnel 40, as indicated by arrow 47, in order to compress the powder of loose explosive material 44. The explosive material could be any type of primary explosives, but is preferably AgN₃ and PbN₆.

Figure 4c shows the result of the compressing stage when the tool 45 is retracted from the funnel 40, as indicated by the arrow 48. The funnel 40 is thereafter removed and the sheet of material 11 is moved from the support 41. In figure 4d, a film 19 is mounted to the second side of the sheet of material 11 and a conductor is attached between the conductive surfaces 14 and 15 before the ignition transfer material 17 is arranged over the conductor and the compressed explosive material 13, which completes the process.

However, it should be mentioned that the film 19 on the second side of the sheet material 11 may be attached before the sheet of material is placed on the support 41 as illustrated in figure 4a. The essential function of the film is to provide a defined interface surface to which additional equipment may be attached, as shown in connection with figures 5a and 5b.

Figures 5a and 5b illustrate the function of the explosive device in figure 1 when attached to additional equipment, such as a pressurized gas container 50. Other types of additional equipment, e.g. a fuze, may be attached to the explosive device for military applications.

The film 19 is arranged adjacent to an opening 51 of the pressurized gas container 50, which is covered with a membrane 52. The explosive device is activated by applying a potential between the conductive surfaces 14 and 15, whereby an igniting stimuli, such as a conductor applied between the conductive surfaces 14 and 15, and an ignition transfer material 17 embedding the conductor. The conductor, e.g. a bridge wire, exploding bridge wire or an exploding foil, and the ignition transfer material 17 ignites the explosive material 13 when activated, and the result of the explosion is illustrated in figure 5b.

The ignition stimuli, i.e. conductor and ignition transfer material 17, and the explosive material 13 are disintegrated after the explosion and an opening 53 is created in the film 19 and the membrane 52 allowing pressurized gas, e.g. CO₂, to escape from the pressurized gas container 50 through the explosive device as indicated by the arrow.

Furthermore, it should be noted that some of the energy from the explosion is preferably absorbed in the substrate 11, provided an energy absorbent material is used. The energy absorbent material preferably includes a laminated structure, composite structure, random fibres or ceramics. The energy absorbent material will then expand, e.g. by delaminating the structure as indicated in figure 5b, see reference numeral 54.

The purpose with the energy absorbing material is mainly to limit the destructive forces on adjacently arranged devices on the substrate and/or the fixture to with the explosive device is mounted. The energy released from the explosion into the substrate is used to delaminate the substrate.

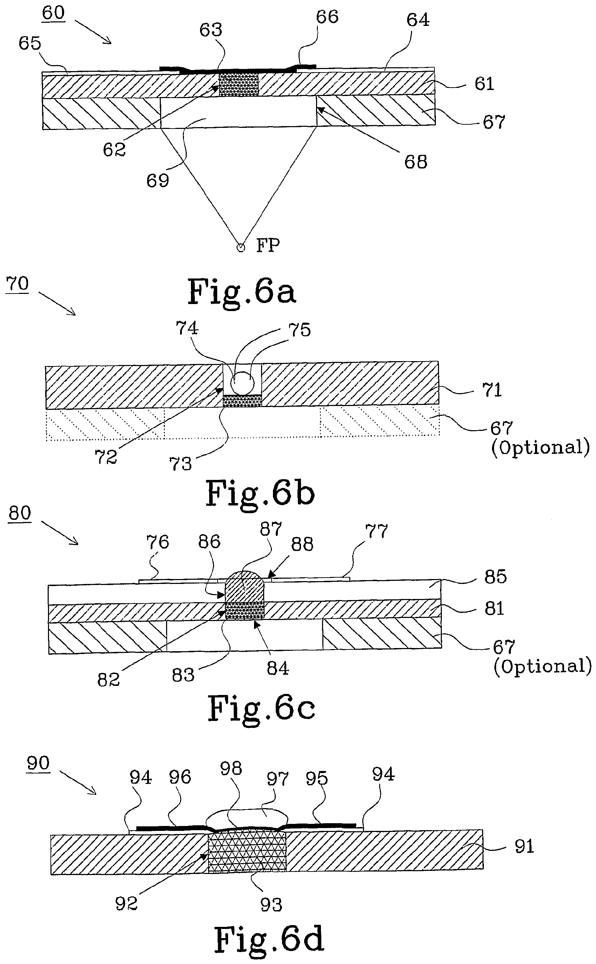

Figs. 6a-6d show alternative embodiments of an explosive device according to the invention.

Figure 6a illustrates a third embodiment of an explosive device 60 comprising a main substrate 61 having an opening 62, preferably having a circular cross-section, completely filled with an explosive material 63. Conductive surfaces 64 and 65 are arranged on an upper surface of the main substrate 61 and a conductor 66 is arranged between the conductive surfaces 64 and 65 directly on top of the explosive material 63. The conductor 66 is preferably implemented as a bridge wire, exploding bridge wire (EBW) or an exploding foil, and may be integrated with an plastic material.

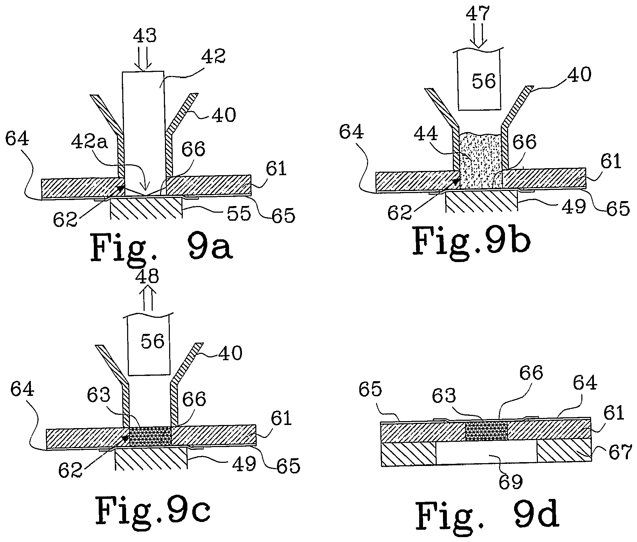

The explosive device 60 may be manufactured using a similar process as described in connection with figure 4a-4d with a few exceptions, as illustrated in connection with figures 9a-9d.

An additional substrate 67 having an additional opening 68 is arranged to the lower surface of the main substrate 61, opposite to the upper surface, and a booster explosive 69, such as PETN, is arranged in the additional opening 68 adjacent to the explosive material 63. The additional opening 68 is preferably circular and wider than the opening 62 in the main substrate 61, to create an explosive device that is self-focusing to a focal point FP, as illustrated in figure 6a.

Figure 6b illustrates a fourth embodiment of an explosive device 70 comprising a main substrate 71 having an opening 72, preferably having a circular cross-section, partly filled with an explosive material 73. The thickness of explosive material 73 preferably corresponds to 10-20% of the thickness of the main substrate 71, i.e. if the substrate is 10 mm then the thickness of the explosive material 73 within the opening 72 is 1-2 mm. Thus, it may be necessary to provide a printed circuit board having an increased thickness compared to normal circuit boards, when used as a substrate as illustrated in figure 6b.

The main substrate 71 has an upper surface and an opposing lower surface, and the explosive material 73 is arranged within the opening 72 at the lower surface of the main substrate 71. An ignition bead 74 is placed within the opening 72 on top of the explosive material 73, and ignition wires 75 connected to the ignition bead 74 extend from the opening 72 and are available at the upper surface of the main substrate 71. An additional substrate 67 similar to the substrate described in connection with figure 6a may also be provided.

The use of an ignition bead 74 may lead to a delay, which may be disadvantageous, in contrary to the use of EBW, exploding foil and bridge wire which act instantly when initiated.

Figure 6c illustrates a fifth embodiment of an explosive device 80 comprising a multilayered structure. A first layer comprises a main substrate 81 having a recess 82 completely filed with an explosive material 83. The recess has an opening in an upper surface of the main substrate 81 and a thin wall 84 separates the explosive material 83 from a lower surface of the main substrate 81. A second layer is arranged to the lower surface of the main substrate 81, which second layer corresponds to the additional substrate 67 having an opening 68 filled with a booster explosive 69 as described above.

A third layer comprises an ignition substrate 85 arranged to the upper surface of the main substrate 81. A through hole 86 is provided through the ignition substrate 85 and aligned with the opening of the recess 82. Conductive surfaces 76 and 77 are provided on the upper surface of the ignition substrate 85, which is made from a non-conductive material. A fuse composition (or ignition material) 87 is provided in the through hole 86 and a conductor 88 is arranged between the conductive surfaces and through the fuse composition 87. The conductor 88 may be implemented as an ignition wire.

Figure 6d illustrates a sixth embodiment of an explosive device 90 comprising a conductive substrate 91, preferably made from aluminum, having a through-hole 92. An explosive material 93 is provided in the through-hole 92. An electrically insulating material 94 is provided completely around the through-hole 92 on the upper surface to insulate conductive surfaces 95 and 96. A conductor 98 is connected between the conductive surfaces, and a fuse composition (or ignition material) 97 is arranged on top of the conductor and the explosive material 93. An additional layer with a booster explosive may naturally be attached on the lower surface of the substrate 91.

The hole, or recess, in the above described embodiments preferably has a circular opening with a diameter ranging between 0.5-5 mm. less than 150 mg of explosives is preferably used and the thickness of each substrate is preferably less than 10 mm if a printed circuit board is used. The printed circuit board preferably has a laminated structure to absorb energy when the explosive material is activated, and preferably comprises an anisotropic material such as glass fibers and epoxy.

The thickness of the substrate 91 in figure 6d is preferably less than 2 mm when aluminum is used.

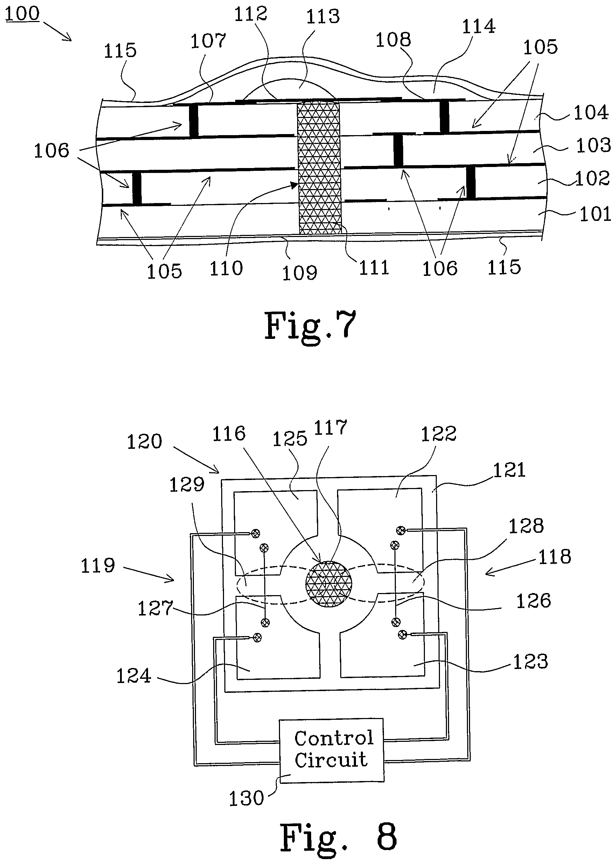

Figure 7 shows an explosive device 100 in a multilayered structure comprising four printed circuit boards 101, 102, 103, 104. Electrical connections 105 are created on the circuit boards and via holes 106 interconnect the electrical connections on different layers. Conductive surfaces 107 and 108 are provided on the upper surface of the circuit board 104 arranged at the top of the multilayered structure, and a film 109 is provided on the lower surface of the circuit board 101 arranged at the bottom of the multilayered structure.

A through hole 110 is arranged through all circuit boards 101-104 and is in this embodiment completely filled with an explosive material 111. A conductor 112 is provided between the conductive surfaces 107 and 108 and an ignition transfer material 113 is arranged over the explosive material 111 and the conductor 112, as described in connection with figure 1.

An isolator 114, preferably silicone rubber or Latex®, is provided in the upper surface covering the conductive surfaces 107 and 108 as well as the ignition transfer material 113, the explosive material 111 and the conductor 112. The purpose with the isolator is to confine the moisture sensitive components of the explosive device 100. Furthermore, a conformal coating 115, preferably Parylene®, is provided around the complete explosive device 100 to improve ignition reliability. The purpose of the conformal coating is to isolate the explosive device from a hostile environment and maintain a suitable interior operating environment to ensure proper operation.

Figure 8 shows a top view of an explosive device 120 provided with two independent igniting stimuli 118 and 119. The explosive device 120 comprises a substrate 121 having four separate conductive surfaces 122, 123, 124 and 125 arranged in relation to a hole 116 being filled with an explosive material 117. A first conductor 126 is connected between conductive surfaces 122 and 123, and a second conductor 127 is connected between conductive surfaces 124 and 125. The conductors are, in this embodiment, exemplified as bridge wires but other types of conductors may naturally be used. A first ignition transfer material 128 is provided between the first conductor 126 and the explosive material 117, and a second ignition transfer material 129 is provided between the second conductor 127 and the explosive material 117.

In this embodiment, the first igniting stimulus comprises the first conductor 126 and the first ignition transfer material 128, and the second igniting stimulus comprises the second conductor 127 and the second ignition transfer material 129. However, it is possible to implement each ignition stimulus without having an ignition transfer material as described in connection with figures 6a-6d.

The two igniting stimuli 118 and 119 of the explosive device 120 is configured to be connected through wires to an external control unit 130, which may be implemented on the same substrate as the explosive device. The wires connect each conductive surface to the control circuit 130, whereby the control circuitry may independently control the activation of each igniting stimulus 118 and 119.

For instance, the control circuit may initiate the first igniting stimulus 118 and monitor the result of the activation. If the explosive device is not activated due to a malfunction in the first igniting stimulus, the control circuit may initiate the second igniting stimulus to activate the explosive device.

Figures 9a-9d illustrate an alternative process for manufacturing an explosive device, as described in connection with figure 6a. The process is similar to the process described in connection with figures 4a-4d, with a few basic differences.

The explosive device is manufactured up-side-down as illustrated in figure 9a. The conductive surfaces 64 and 65 on the substrate 61 are placed downwards, and a plastic film having an integrated conductor 66, such as a bridge wire, is arranged in such a way that a connection is made between the conductive surfaces via the conductor 66 in the film. A support 55 is used together with a funnel 40 and a guiding pin 42 to align the hole 62 with the funnel opening, as described above.

Figure 9b illustrates the compressing stage of the manufacture process, in which a tool 56, preferably having a flat surface, is used to compress the explosive material and bring it into contact with the conductor 66 in the film.

Figure 9c shows the result of the compressing stage when the tool 56 is retracted from the funnel 40, as indicated by the arrow 48. The funnel 40 is thereafter removed and the sheet of material 11 is moved from the support 55 and is flipped over. In figure 9d, an additional substrate 67 with a booster explosive 69 is attached to the substrate 61 as described in connection with figure 6a.

Although all previously described embodiments of the explosive device have been exemplified using a flat substrate, the invention should not be limited to this, since it is highly possible that a curved substrate may be used. The explosive device is still based on a sheet of material with a planar surface.

The fuse composition used in combination with a thin wire, e.g. having a diameter of about 0.03 mm, may comprise lead tricinat or lead styphnate. Another suitable fuse composition preferably comprises:
- 20 percent DDNP (DiazoDiNitroPhenol) or
   KDNBF (Potassium dinitrobenzo-furoxan),
- 20 percent Zirconium powder (micro sized - 2 µm)
- 60 percent Potassium chlorate (KClO₃)

A binder of nitrocellulose resin (4%) is added to the mixture.

It should be noted that an essential advantage with the present invention is that a very small amount of explosive material is needed for proper operation compared to prior art devices. As an example, 15 mg of explosive material will have the same effect as 200-400 mg of explosive material in prior art penetrating devices.

## Claims

1. An explosive device (10; 60; 70; 80; 90; 100; 120) comprising:
- a sheet of material (11; 61; 71; 81, 85; 91; 121) provided with at least one hole;
wherein said at least one hole (12; 62; 72; 82; 92; 110; 116) forms an opening in a first side of said sheet of material (11; 61; 71; 81, 85; 91; 121);
- an explosive material (13; 63; 73; 83; 93; 117);
wherein said at least one hole (12; 62; 72; 82; 92; 110; 116) is at least partially filled with said explosive material (13; 63; 73; 83; 93; 117); and
- at least one igniting stimulus (16, 17; 23; 66; 74; 87, 88; 97, 98; 112, 113; 118, 119, 126-129) configured to ignite said explosive material (13; 63; 73; 83; 93; 117) when activated,
**characterized by**
- conductive surfaces (14, 15; 64, 65; 76, 77; 95, 96; 107, 108; 122-125) on said first side of said sheet of material (11; 61; 71; 81, 85; 91; 121);
wherein said at least one igniting stimulus (16, 17; 23; 66; 74; 87, 88; 97, 98; 112, 113; 118, 119, 126-129) is arranged on said first side connected to said conductive surfaces (14, 15; 64, 65; 76, 77; 95, 96; 107, 108; 122-125).

2. The explosive device according to claim 1, wherein said sheet of material (11; 61; 71; 81, 85; 91; 121) is an explosion energy absorbent material.

3. The explosive device, according to claim 2, wherein said explosion energy absorbent material comprises laminated structure, random fibre or ceramics.

4. The explosive device according to any of claims 2-3, wherein said sheet of material (11; 61; 71; 81, 85; 91; 121) has a multilayered structure (101-104).

5. The explosive device according to claim 4, wherein said sheet of material (11; 61; 71; 81, 85; 91; 121) comprises at least one laminated circuit board.

6. The explosive device according to claim 5, wherein said sheet of material (11; 61; 71; 81, 85; 91; 121) comprises a plurality of circuit boards (101-104) arranged to form said multilayered structure.

7. The explosive device according to claim 4, wherein said sheet of material is a multilayered circuit board (101-104).

8. The explosive device according to any of claims 1-7, wherein said at least one hole (12; 62; 72; 82; 92; 110; 116) is completely filled with said explosive material (13; 63; 73; 83; 93; 117).

9. The explosive device according to any of claims 1-8, wherein each hole (12; 62; 72; 82; 92; 110; 116) is a through hole, thereby forming an opening on a second side, opposite to said first side, of said sheet material (11; 61; 71; 81, 85; 91; 121).

10. The explosive device according to claim 9, wherein a sealing material (19) is provided across the opening on the second side of the sheet of material (11; 61; 71; 81, 85; 91; 121).

11. The explosive device according to any of claims 1-10, wherein a first igniting stimulus comprises a conductor (16; 23; 66; 88; 98; 112; 126-127) connected between two said conductive surfaces (14, 15; 64, 65; 76, 77; 95, 96; 107, 108; 122-125).

12. The explosive device according to claim 11, wherein said conductor (16; 23; 66; 88; 98; 112; 126-127) is a bridge wire, exploding bridge wire or an exploding foil.

13. The explosive device according to any of claims 11-12, wherein said conductor (16; 23; 66; 88; 98; 112; 126-127) is arranged across the opening on said first side and in contact with said explosive material (13; 63; 73; 93; 117).

14. The explosive device according to any of claims 11-12, wherein said igniting stimulus further comprises ignition transfer material (17; 97; 113; 128-129) arranged between said conductor (16; 23; 66; 88; 98; 112; 126-127) and said explosive material (13; 63; 73; 83; 93; 117).

15. A method for manufacturing an explosive device (10; 60; 70; 80; 90; 100; 120), comprising:
- providing at least one hole (12; 62; 72; 82; 92; 110; 116) in a sheet of material (11; 61; 71; 81, 85; 91; 121), said at least one hole (12; 62; 72; 82; 92; 110; 116) forming an opening in a first side of said sheet of material (11; 61; 71; 81, 85; 91; 121),
- filling said at least one hole (12; 62; 72; 82; 92; 110; 116) at least partially with an explosive material (13; 63; 73; 83; 93; 117), and
- arranging, on said first side, at least one igniting stimulus (16, 17; 23; 66; 74; 87, 88; 97, 98; 112, 113; 118, 119, 126-129) to be configured to ignite said explosive material (13; 63; 73; 83; 93; 117) when activated,
**characterized in that**
said sheet of material (11; 61; 71; 81, 85; 91; 121) is provided with conductive surfaces (14, 15; 64, 65; 76, 77; 95, 96; 107, 108; 122-125) on said first side;
wherein said arranging of said at least one igniting stimulus (16, 17; 23; 66; 74; 87, 88; 97, 98; 112, 113; 118, 119, 126-129) comprises connecting said at least one igniting stimulus (16, 17; 23; 66; 74; 87, 88; 97, 98; 112, 113; 118, 119, 126-129) to said conductive surfaces (14, 15; 64, 65; 76, 77; 95, 96; 107, 108; 122-125).

16. The method according to claim 15, wherein selecting said sheet of material (11; 61; 71; 81, 85; 91; 121) to be an explosion energy absorbing material.

17. The method according to any of claims 15-16, wherein arranging the at least one igniting stimulus (16, 17; 23; 66; 74; 87, 88; 97, 98; 112, 113; 118, 119, 126-129) comprises arranging a conductor (16; 23; 66; 88; 98; 112; 126-127) between two said conductive surfaces (14, 15; 64, 65; 76, 77; 95, 96; 107, 108; 122-125) arranged on the first side of the sheet of material (11; 61; 71; 81, 85; 91; 121).

18. The method according to claim 17, wherein the method further comprises arranging the conductor (16; 23; 66; 88; 98; 112; 126-127) across the opening on said first side and in contact with said explosive material (13; 63; 73; 83; 93; 117).

19. The method according to claim 17, wherein the method further comprises arranging ignition transfer material (17; 97; 113; 128-129) between said conductor (16; 23; 66; 88; 98; 112; 126-127) and said explosive material (13; 63; 73; 83; 93; 117).

## Patentansprüche

1. Explosionsvorrichtung (10; 60; 70; 80; 90; 100; 120), umfassend:
- eine Materialplatte (11; 61; 71; 81; 85; 91; 121), die mit mindestens einem Loch versehen ist;
wobei das mindestens eine Loch (12; 62; 72; 82; 92; 110; 116) eine Öffnung in einer ersten Seite der Materialplatte (11; 61; 71; 81; 85; 91; 121) bildet;
- ein Explosionsmaterial (13; 63; 73; 83; 93; 117);
wobei das mindestens eine Loch (12; 62; 72; 82; 92; 110; 116) zumindest teilweise mit dem Explosionsmaterial (13; 63; 73; 83; 93; 117) gefüllt ist; und
- mindestens einen Zündimpuls (16, 17; 23; 66; 74; 87, 88; 97, 98; 112, 113; 118, 119, 126-129), der, wenn er aktiviert wird, ausgelegt ist, das Explosionsmaterial (13; 63; 73; 83; 93; 117) zu zünden;
**gekennzeichnet durch**
- leitfähige Oberflächen (14, 15; 64, 65; 76, 77; 95, 96; 107, 108; 122-125) auf der ersten Seite der Materialplatte (11; 61; 71; 81; 85; 91; 121);
wobei der mindestens eine Zündimpuls (16, 17; 23; 66; 74; 87, 88; 97, 98; 112, 113; 118, 119, 126-129) auf der mit den leitfähigen Oberflächen (14, 15; 64, 65; 76, 77; 95, 96; 107, 108; 122-125) verbundenen ersten Seite angeordnet ist.

2. Explosionsvorrichtung nach Anspruch 1, wobei die Materialplatte (11; 61; 71; 81; 85; 91; 121) aus einem Explosionsenergie-absorbierenden Material ist.

3. Explosionsvorrichtung nach Anspruch 2, wobei das Explosionsenergieabsorbierende Material eine beschichtete Struktur, Wirrfaser oder Keramik umfasst.

4. Explosionsvorrichtung nach einem der Ansprüche 2 bis 3, wobei die Materialplatte (11; 61; 71; 81; 85; 91; 121) eine Mehrschichtstruktur (101-104) aufweist.

5. Explosionsvorrichtung nach Anspruch 4, wobei die Materialplatte (11; 61; 71; 81; 85; 91; 121) mindestens eine beschichtete Platine umfasst.

6. Explosionsvorrichtung nach Anspruch 5, wobei die Materialplatte (11; 61; 71; 81; 85; 91; 121) eine Vielzahl von Platinen (101-104) umfasst, die angeordnet sind, um die Mehrschichtstruktur zu bilden.

7. Explosionsvorrichtung nach Anspruch 4, wobei die Materialplatte eine mehrschichtige Platine (101-104) ist.

8. Explosionsvorrichtung nach einem der Ansprüche 1 bis 7, wobei das mindestens eine Loch (12; 62; 72; 82; 92; 110; 116) vollständig mit dem Explosionsmaterial (13; 63; 73; 83; 93; 117) gefüllt ist.

9. Explosionsvorrichtung nach einem der Ansprüche 1 bis 8, wobei jedes Loch (12; 62; 72; 82; 92; 110; 116) ein Durchgangsloch ist, wodurch eine Öffnung auf einer zweiten Seite, gegenüber der ersten Seite, der Materialplatte (11; 61; 71; 81; 85; 91; 121) gebildet wird.

10. Explosionsvorrichtung nach Anspruch 9, wobei ein Dichtmaterial (19) über der Öffnung auf der zweiten Seite der Materialplatte (11; 61; 71; 81; 85; 91; 121) vorgesehen ist.

11. Explosionsvorrichtung nach einem der Ansprüche 1 bis 10, wobei ein erster Zündimpuls einen Leiter (16; 23; 66; 88; 98; 112; 126-127) umfasst, der zwischen zwei der leitfähigen Oberflächen (14, 15; 64, 65; 76, 77; 95, 96; 107, 108; 122-125) geschaltet ist.

12. Explosionsvorrichtung nach Anspruch 11, wobei der Leiter (16; 23; 66; 88; 98; 112; 126-127) eine Drahtbrücke, eine Explosionsdrahtbrücke oder eine Explosionsfolie ist.

13. Explosionsvorrichtung nach einem der Ansprüche 11 bis 12, wobei der Leiter (16; 23; 66; 88; 98; 112; 126-127) über der Öffnung auf der ersten Seite und in Kontakt mit dem Explosionsmaterial (13; 63; 73; 93; 117) angeordnet ist.

14. Explosionsvorrichtung nach einem der Ansprüche 11 bis 12, wobei der Zündimpuls ferner ein Zündungsübertragungsmaterial (17; 97; 113; 128-129), das zwischen dem Leiter (16; 23; 66; 88; 98; 112; 126-127) und dem Explosionsmaterial (13; 63; 73; 83; 93; 117) angeordnet ist, umfasst.

15. Verfahren zur Herstellung einer Explosionsvorrichtung (10; 60; 70; 80; 90; 100; 120), umfassend:
- Bereitstellen mindestens eines Lochs (12; 62; 72; 82; 92; 110; 116) in einer Materialplatte (11; 61; 71; 81; 85; 91; 121), wobei das mindestens eine Loch (12; 62; 72; 82; 92; 110; 116) eine Öffnung in einer ersten Seite der Materialplatte (11; 61; 71; 81; 85; 91; 121) bildet;
- Füllen des mindestens einen Lochs (12; 62; 72; 82; 92; 110; 116) zumindest teilweise mit einem Explosionsmaterial (13; 63; 73; 83; 93; 117), und
- Anordnen mindestens eines Zündimpulses (16, 17; 23; 66; 74; 87, 88; 97, 98; 112, 113; 118, 119, 126-129) auf der ersten Seite, der, wenn er aktiviert wird, ausgelegt ist, das Explosionsmaterial (13; 63; 73; 83; 93; 117) zu zünden,
**dadurch gekennzeichnet, dass**
- die Materialplatte (11; 61; 71; 81; 85; 91; 121) mit leitfähigen Oberflächen (14, 15; 64, 65; 76, 77; 95, 96; 107, 108; 122-125) auf der ersten Seite versehen ist; wobei das Anordnen des mindestens einen Zündimpulses (16, 17; 23; 66; 74; 87, 88; 97, 98; 112, 113; 118, 119, 126-129) ein Verbinden des mindestens einen Zündimpulses (16, 17; 23; 66; 74; 87, 88; 97, 98; 112, 113; 118, 119, 126-129) mit den leitfähigen Oberflächen (14, 15; 64, 65; 76, 77; 95, 96; 107, 108; 122-125) umfasst.

16. Verfahren nach Anspruch 15, wobei die Materialplatte (11; 61; 71; 81; 85; 91; 121) als ein Explosionsenergieabsorbierendes Material ausgewählt wird.

17. Verfahren nach einem der Ansprüche 15 bis 16, wobei Anordnen des mindestens einen Zündimpulses (16, 17; 23; 66; 74; 87, 88; 97, 98; 112, 113; 118, 119, 126-129) Anordnen eines Leiters (16; 23; 66; 88; 98; 112; 126-127) zwischen zwei der leitfähigen Oberflächen (14, 15; 64, 65; 76, 77; 95, 96; 107, 108; 122-125), die auf der ersten Seite der Materialplatte (11; 61; 71; 81; 85; 91; 121) angeordnet sind, umfasst.

18. Verfahren nach Anspruch 17, wobei das Verfahren ferner Anordnen des Leiters (16; 23; 66; 88; 98; 112; 126-127) über der Öffnung auf der ersten Seite und in Kontakt mit dem Explosionsmaterial (13; 63; 73; 83; 93; 117) umfasst.

19. Verfahren nach Anspruch 17, wobei das Verfahren ferner Anordnen von Zündungsübertragungsmaterial (17; 97; 113; 128-129) zwischen dem Leiter (16; 23; 66; 88; 98; 112; 126-127) und dem Explosionsmaterial (13; 63; 73; 83; 93; 117) umfasst.

## Revendications

1. Dispositif explosif (10 ; 60 ; 70 ; 80 ; 90 ; 100 ; 120) comprenant :
- une feuille de matériau (11 ; 61 ; 71 ; 81, 85 ; 91 ; 121) dotée d'au moins un trou ;
dans lequel ledit au moins un trou (12 ; 62 ; 72 ; 82 ; 92 ; 110 ; 116) forme une ouverture dans un premier côté de ladite feuille de matériau (11 ; 61 ; 71 ; 81, 85 ; 91 ; 121) ;
- un matériau explosif (13 ; 63 ; 73 ; 83 ; 93 ; 117) ;
dans lequel ledit au moins un trou (12 ; 62 ; 72 ; 82 ; 92 ; 110 ; 116) est au moins partiellement rempli avec ledit matériau explosif (13 ; 63 ; 73 ; 83 ; 93 ; 117) ; et
- au moins un stimulateur d'allumage (16, 17 ; 23 ; 66 ; 74 ; 87, 88 ; 97, 98 ; 112, 113 ; 118, 119, 126 à 129) configuré pour allumer ledit matériau explosif (13 ; 63 ; 73 ; 83 ; 93 ; 117) lorsqu'il est activé,
**caractérisé par**
- des surfaces conductrices (14, 15 ; 64, 65 ; 76, 77 ; 95, 96 ; 107, 108 ; 122 à 125) sur ledit premier côté de ladite feuille de matériau (11 ; 61 ; 71 ; 81, 85 ; 91 ; 121) ;
dans lequel ledit au moins un stimulateur d'allumage (16, 17 ; 23 ; 66 ; 74 ; 87, 88 ; 97, 98 ; 112, 113 ; 118, 119, 126 à 129) est agencé sur ledit premier côté raccordé auxdites surfaces conductrices (14, 15 ; 64, 65 ; 76, 77 ; 95, 96 ; 107, 108 ; 122 à 125).

2. Dispositif explosif selon la revendication 1, dans lequel ladite feuille de matériau (11 ; 61 ; 71 ; 81, 85 ; 91 ; 121) est un matériau absorbant l'énergie d'explosion.

3. Dispositif explosif selon la revendication 2, dans lequel ledit matériau absorbant l'énergie d'explosion comprend une structure stratifiée, des fibres quelconques ou de la céramique.

4. Dispositif explosif selon l'une quelconque des revendications 2 à 3, dans lequel ladite feuille de matériau (11 ; 61 ; 71 ; 81, 85 ; 91 ; 121) a une structure multicouche (101 à 104).

5. Dispositif explosif selon la revendication 4, dans lequel ladite feuille de matériau (11 ; 61 ; 71 ; 81, 85 ; 91 ; 121) comprend au moins une carte de circuit imprimé stratifiée.

6. Dispositif explosif selon la revendication 5, dans lequel ladite feuille de matériau (11 ; 61 ; 71 ; 81, 85 ; 91 ; 121) comprend une pluralité de cartes de circuit imprimé (101 à 104) agencées pour former ladite structure multicouche.

7. Dispositif explosif selon la revendication 4, dans lequel ladite feuille de matériau est une carte de circuit imprimé multicouche (101 à 104).

8. Dispositif explosif selon l'une quelconque des revendications 1 à 7, dans lequel ledit au moins un trou (12 ; 62 ; 72 ; 82 ; 92 ; 110 ; 116) est totalement rempli avec ledit matériau explosif (13 ; 63 ; 73 ; 83 ; 93 ; 117).

9. Dispositif explosif selon l'une quelconque des revendications 1 à 8, dans lequel chaque trou (12 ; 62 ; 72 ; 82 ; 92 ; 110 ; 116) est un trou traversant, formant ainsi une ouverture sur un second côté, opposé audit premier côté, de ladite feuille de matériau (11 ; 61 ; 71 ; 81, 85 ; 91 ; 121).

10. Dispositif explosif selon la revendication 9, dans lequel un matériau d'étanchéité (19) est prévu sur l'ouverture sur le second côté de la feuille de matériau (11 ; 61 ; 71 ; 81, 85 ; 91 ; 121).

11. Dispositif explosif selon l'une quelconque des revendications 1 à 10, dans lequel un premier stimulateur d'allumage comprend un conducteur (16 ; 23 ; 66 ; 88 ; 98 ; 112 ; 126 à 127) connecté entre lesdites deux surfaces conductrices (14, 15 ; 64, 65 ; 76, 77 ; 95, 96 ; 107, 108 ; 122 à 125).

12. Dispositif explosif selon la revendication 11, dans lequel ledit conducteur (16 ; 23 ; 66 ; 88 ; 98 ; 112 ; 126 à 127) est un fil à pont, un fil à pont d'explosion ou une feuille explosive.

13. Dispositif explosif selon l'une quelconque des revendications 11 à 12, dans lequel ledit conducteur (16 ; 23 ; 66 ; 88 ; 98 ; 112 ; 126 à 127) est agencé sur l'ouverture sur ledit premier côté et en contact avec ledit matériau explosif (13 ; 63 ; 73 ; 93 ; 117).

14. Dispositif explosif selon l'une quelconque des revendications 11 à 12, dans lequel ledit stimulateur d'allumage comprend en outre un matériau de transfert d'allumage (17 ; 97 ; 113 ; 128 à 129) agencé entre ledit conducteur (16 ; 23 ; 66 ; 88 ; 98 ; 112 ; 126 à 127) et ledit matériau explosif (13 ; 63 ; 73 ; 83 ; 93 ; 117).

15. Procédé de fabrication d'un dispositif explosif (10 ; 60 ; 70 ; 80 ; 90 ; 100 ; 120), comprenant :
- la fourniture d'au moins un trou (12 ; 62 ; 72 ; 82 ; 92 ; 110 ; 116) dans une feuille de matériau (11 ; 61 ; 71 ; 81, 85 ; 91 ; 121), ledit au moins un trou (12 ; 62 ; 72 ; 82 ; 92 ; 110 ; 116) formant une ouverture dans un premier côté de ladite feuille de matériau (11 ; 61 ; 71 ; 81, 85 ; 91 ; 121),
- le remplissage dudit au moins un trou (12 ; 62 ; 72 ; 82 ; 92 ; 110 ; 116) au moins partiellement avec un matériau explosif (13 ; 63 ; 73 ; 83 ; 93 ; 117), et
- l'agencement, sur ledit premier côté, d'au moins un stimulateur d'allumage (16, 17 ; 23 ; 66 ; 74 ; 87, 88 ; 97, 98 ; 112, 113 ; 118, 119, 126 à 129) pour qu'il soit configuré pour allumer ledit matériau explosif (13 ; 63 ; 73 ; 83 ; 93 ; 117) lorsqu'il est activé,
**caractérisé en ce que**
ladite feuille de matériau (11 ; 61 ; 71 ; 81, 85 ; 91 ; 121) est dotée de surfaces conductrices (14, 15 ; 64, 65 ; 76, 77 ; 95, 96 ; 107, 108 ; 122 à 125) sur ledit premier côté ;
dans lequel ledit agencement dudit au moins un stimulateur d'allumage (16, 17 ; 23 ; 66 ; 74 ; 87, 88 ; 97, 98 ; 112, 113 ; 118, 119, 126 à 129) comprend la connexion dudit au moins un stimulateur d'allumage (16, 17 ; 23 ; 66 ; 74 ; 87, 88 ; 97, 98 ; 112, 113 ; 118, 119, 126 à 129) auxdites surfaces conductrices (14, 15 ; 64, 65 ; 76, 77 ; 95, 96 ; 107, 108 ; 122 à 125).

16. Procédé selon la revendication 15, dans lequel la sélection de ladite feuille de matériau (11 ; 61 ; 71 ; 81, 85 ; 91 ; 121) pour qu'elle soit un matériau absorbant l'énergie d'explosion.

17. Procédé selon l'une quelconque des revendications 15 à 16, dans lequel l'agencement de l'au moins un stimulateur d'allumage (16, 17 ; 23 ; 66 ; 74 ; 87, 88 ; 97, 98 ; 112, 113 ; 118, 119, 126 à 129) comprend l'agencement d'un conducteur (16 ; 23 ; 66 ; 88 ; 98 ; 112 ; 126 à 127) entre lesdites deux surfaces conductrices (14, 15 ; 64, 65 ; 76, 77 ; 95, 96 ; 107, 108 ; 122 à 125) agencées sur le premier côté de la feuille de matériau (11 ; 61 ; 71 ; 81, 85 ; 91 ; 121).

18. Procédé selon la revendication 17, dans lequel le procédé comprend en outre l'agencement du conducteur (16 ; 23 ; 66 ; 88 ; 98 ; 112 ; 126 à 127) sur l'ouverture sur ledit premier côté et en contact avec ledit matériau explosif (13 ; 63 ; 73 ; 83 ; 93 ; 117).

19. Procédé selon la revendication 17, dans lequel le procédé comprend en outre l'agencement d'un matériau de transfert d'allumage (17 ; 97 ; 113 ; 128 à 129) entre ledit conducteur (16 ; 23 ; 66 ; 88 ; 98 ; 112 ; 126 à 127) et ledit matériau explosif (13 ; 63 ; 73 ; 83 ; 93 ; 117).
